# EUROPEAN PATENT SPECIFICATION

(11) **EP 0 459 403 B1**
(45) Date of publication and mention of the grant of the patent: **10.07.1996**
(21) Application number: 91108703.9
(22) Date of filing: 28.05.1991
(51) Int. Cl.: G11B 5/127, G11B 5/187, G11B 5/23

(54) **Method for manufacturing a magnetic transducer head**
Herstellungsverfahren eines magnetischen Wandlerkopfes
Procédé de fabrication d'une tête de transduction magnétique

(30) Priority: 31.05.1990 JP 143093/90
(43) Date of publication of application: 04.12.1991
(73) Proprietor: SONY CORPORATION, Tokyo (JP)
(72) Inventor: Katsumi, Sakata, c/o SONY MAGNETIC, Shinagawa-ku, Tokyo (JP); Tatsuo, Kumura, c/o SONY MAGNETIC, Shinagawa-ku, Tokyo (JP); Atsushi, Suzuki, c/o SONY MAGNETIC, Shinagawa-ku, Tokyo (JP); Yoshito, Ikeda, c/o SONY MAGNETIC, Shinagawa-ku, Tokyo (JP); Kaoru, Aoki, c/o SONY MAGNETIC, Shinagawa-ku, Tokyo (JP); Naoto, Kojima, c/o SONY MAGNETIC, Shinagawa-ku, Tokyo (JP); Akio, Mishima, Shinagawa-ku, Tokyo (JP)
(74) Representative: TER MEER - MÜLLER - STEINMEISTER & PARTNER

(56) References cited:
- US-A- 3 672 045
- PATENT ABSTRACTS OF JAPAN vol. 13, no. 351 (P-912)7 August 1989 & JP-A-01 109 504

## Description

### BACKGROUND OF THE INVENTION

The present invention relates to a method for manufacturing a magnetic transducer head said method including a deposition process of non magnetic material to fill grooves defining a track width of the head.

Recently, a bonding method utilizing low-temperature metal diffusion has been developed, and efforts have been made to apply the bonding method primarily to bonding magnetic core members together to form a gap in manufacturing a magnetic head.

The use of low-temperature metal diffusion eliminates a high-temperature heating process such as the fusion of glass, and makes possible the utilization of amorphous magnetic alloys having low heat resistance for forming a so-called metal-in-gap type magnetic head.

When low temperature metal diffusion is used for bonding magnetic core members to form a gap, filling track width regulating grooves with a nonmagnetic material is a problem.

In an ordinary video head, a core (a portion of a magnetic head that is brought into sliding contact with a magnetic recording medium) is formed, in general, in a width greater than the track width in view of abrasion resistance, and the magnetic core is provided with grooves for regulating the track width. When the magnetic core members are bonded together by the fusion of glass to form a gap, the grooves are filled with the glass. When the magnetic core members are bonded together by low-temperature metal diffusion, the grooves form void spaces. Such void spaces may possibly damage a magnetic tape or may possibly spoil the contact between the magnetic head and the magnetic tape.

Such a problem may be solved by filling up the void spaces with glass after bonding together the magnetic core members to form a magnetic core, which however, requires heating the magnetic core to a temperature enough to melt flow a glass. Therefore, it is impossible to use an amorphous alloy having a low temperature of crystallization if a reliable glass having a high melting point is used for filling up the void spaces and the advantage of low-temperature metal diffusion is nullified.

The use of a glass having a low melting point may be effective to make most of the advantage of low-temperature metal diffusion. However, such a glass is not satisfactory in reliability and will cause partial abrasion. Even if a glass having a low melting point is employed, the magnetic core needs unavoidably to be heated at a comparatively high temperature and only limited magnetic metals can be used.
Filling the track width regulating grooves with glass requiring a high-temperature heating process impose many restrictions on the selection of materials for a magnetic head and hence it is impossible to make most of the advantage of low-temperature metal diffusion in combination with filling the track width relating grooves with glass. Furthermore, it is possible that the use of fused glass for filling up the voids entails partial abrasion due to the poor abrasion resistance of the glass regardless of whether or not the magnetic core members are bonded together by low-temperature metal diffusion.

Patent Abstracts of Japan, Vol. 13, No. 351 (P-912), 7.8.1989 relating to JP-A-1 109 504 disclose a method of manufacturing a magnetic transducer head executing a joining on the gap surface of a head core composed of an amorphous alloy with a crystallizing glass powder contained in a groove in the gap surface of the head. In the known method, an amorphous alloy to become a head core is formed on a first surface of a substrate by sputtering. An adhesive glass layer is formed at a second surface of the substrate. A plurality of substrate pieces treated in this way are overlapped and the crystallizing glass layer is crystallized by a heat-processing. In this way a laminated block and, by slicing the latter, a pair of core bars is manufactured. In a gap surface of a first core bar, a winding groove, a reinforced groove and a glass-molding groove are formed, and in a gap surface of a second core bar, only the glass-molding groove is formed. A crystallization glass powder is inserted to the grooves and a low temperature processing is executed in a short time, whereby an amorphous crystallizing glass is formed at the grooves. Thereafter, the gap surfaces are ground and an SiO₂ layer is formed. Then the gap surfaces are protruded and a pressing heating processing is executed. By execution of cutting along a predetermined cutting line, a head chip is cut out. It is to be understood that the known method fills the glass powder into the grooves for carrying out afterwards the joining process by means of crystallization of the glass powder.

### OBJECT AND SUMMARY OF THE INVENTION

It is an object of the invention to provide a method of manufacturing a magnetic transducer head having a superior abrasion resistance.

The above object is solved by a method specified in claim 1.

Depending claims 2 to 7 are each specifying advantageous developments thereof.

Thus there are provided a pair of grooves on the magnetic core members for regulating the width of the gap on both ends of the gap, which are filled by nonmagnetic material. The filling of nonmagnetic material is carried out by blowing a powder beam of nonmagnetic material to cause deposition of the nonmagnetic material in the groove. The gap is formed by bonding the core member, having a metal layer therebetween and applying a pressure under an elevated temperature to cause diffusion of the metal. The process is free of high-temperature heat treatment and avoids any drawbacks caused by high temperature heat treatment on the chracteristics of the soft magnetic metal layer.

### BRIEF DESCRIPTION OF THE DRAWINGS

Figures 1A to 1D are schematic perspective views of assistance in explaining steps of a magnetic head manufacturing method in a first embodiment according to the present invention;
Figure 2 is a schematic perspective view of a magnetic head manufactured by the magnetic head manufacturing method in the first embodiment;
Figure 3 is a schematic sectional view of a blowing apparatus for blowing a nonmagnetic material;
Figure 4 is an enlarged sectional view of an essential portion of a pair of substrates joined together by low-temperature metal diffusion;
Figures 5A to 5C are schematic perspective views of assistance in explaining steps of a magnetic head manufacturing method in a second embodiment according to the present invention; and
Figure 6 is a schematic perspective view of a magnetic head manufactured by the magnetic head manufacturing method in the second embodiment.

### DESCRIPTION OF THE PREFERRED EMBODIMENTS

In the present invention, the track width regulating grooves provided on both sides of a magnetic gap are filled by deposition of filler by applying a powder beam of nonmagnetic filler material. By applying the powder beam under a certain condition explained hereinafter, the grooves are filled by the deposition of the material forming the powder beam.

Preferred embodiments of the present invention will be described hereinafter.

### Example 1

A magnetic head manufacturing method in a first embodiment according to the present invention comprises steps of filling up track width regulating grooves formed previously in substrates 1 formed of ferrite or the like with a nonmagnetic particulate 4 by blowing and then bonding the substrates 1 together by low-temperature metal diffusion to form a gap.

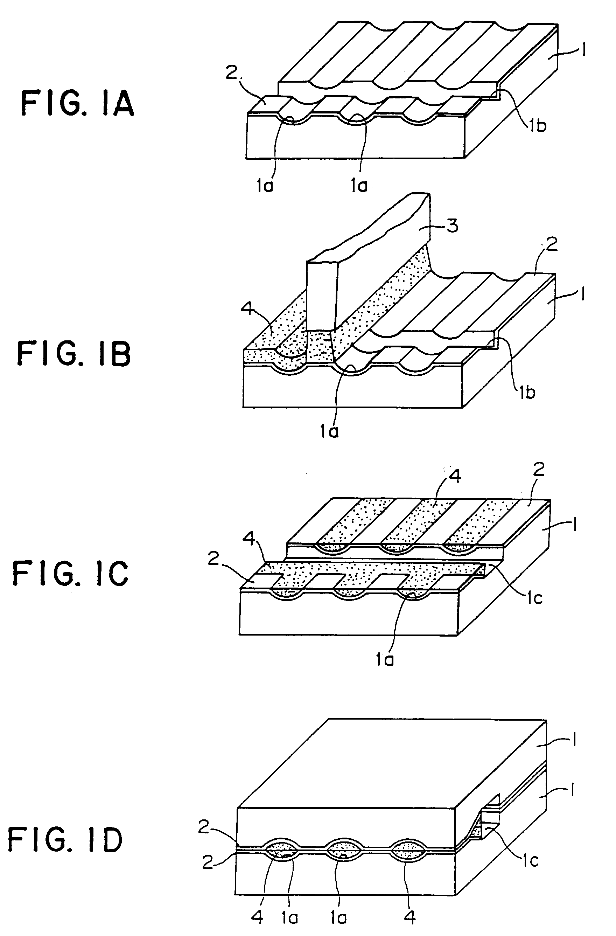

Referring to Fig. 1A, track width regulating grooves la and a coil groove 1b are formed in each substrate 1 formed of, for example, magnetic ferrite, and then a soft magnetic metal thin film 2, such as a thin film of an amorphous magnetic alloy, is formed over the joining surface of each substrate 1 by a vacuum thin-film forming process, such as a sputtering process, or a plating process. The soft magnetic metal thin film 2 may be formed of a known material, such as CoZr, CoNb amorphous magnetic alloy, a soft magnetic two-phase amorphous alloy, an Fe-N soft magnetic metal or a crystalline soft magnetic alloy, such as Fe-Al-Si, Fe-Ge-Si or Fe-Ga-Si-Ru.

Then, as shown in Fig. 1B, a nonmagnetic material 4 is blown through a nozzle 3 having a rectangular nozzle exit to fill up the track width regulating grooves 1a and the coil groove 1b with the nonmagnetic material.

The most significant feature of the magnetic head manufacturing method is the use of particles of the nonmagnetic material having an average particle size in the range of 0.01 to 3 µm. Such submicron particles cause a phenomenon which has never been experienced on the surface of a work. Assuming the angle of incidence of the submicron particles on the surface is in the range of 0 to 10°, the submicron particles are deposited on the surface of the work.

The nonmagnetic material 4 may be of any kind provided that the nonmagnetic material can be reduced to particles. Exemplary possible nonmagnetic materials are oxides, such as alumina and SiO₂, nitrides and carbides. Nonmagnetic materials having a low melting point, such as lead glass, may also be used. In view of abrasion resistance, a nonmagnetic material having a high hardness is preferable.

A blowing apparatus for filling the track width regulating grooves 1a and the coil groove 1b with the nonmagnetic material 4 by blowing will be described hereinafter by way of example.

The blowing apparatus comprises, as principal components, an air compressor 101 for supplying compressed air, a mixing tank 102 in which the compressed air discharged from the air compressor 101 and submicron particles are mixed, a deposition vessel 103 for depositing the submicron particles on the surface of a work 136 by blowing the mixture of the submicron particles and the compressed air against the surface of the work 136, and an exhauster 104 for recovering the submicron particles contained in the mixture discharged from the deposition vessel 103.

An air supply pipe 105 has one end connected to the air compressor 101 and the other end branched into a first air supply pipe 106 and a second air supply pipe 107. Both the first air supply pipe 106 and the second air supply pipe 107 are connected to the mixing tank 102. The air supply pipe 105 is provided with a pressure regulating valve 108 for regulating the pressure of the compressed air supplied to the mixing vessel 102, and a solenoid valve 109 for controlling the supply of the compressed air to the mixing tank 102. The second air supply pipe 107 is provided with a flow regulating valve 110 for regulating the flow of the compressed air through the second air supply pipe 107.

A hopper 111 containing submicron particles is disposed on top of the mixing tank 102. The submicron particles are supplied through an opening normally closed by a cover 112.

As mentioned above, the average particle size of the submicron particles is about 3 µm or less.

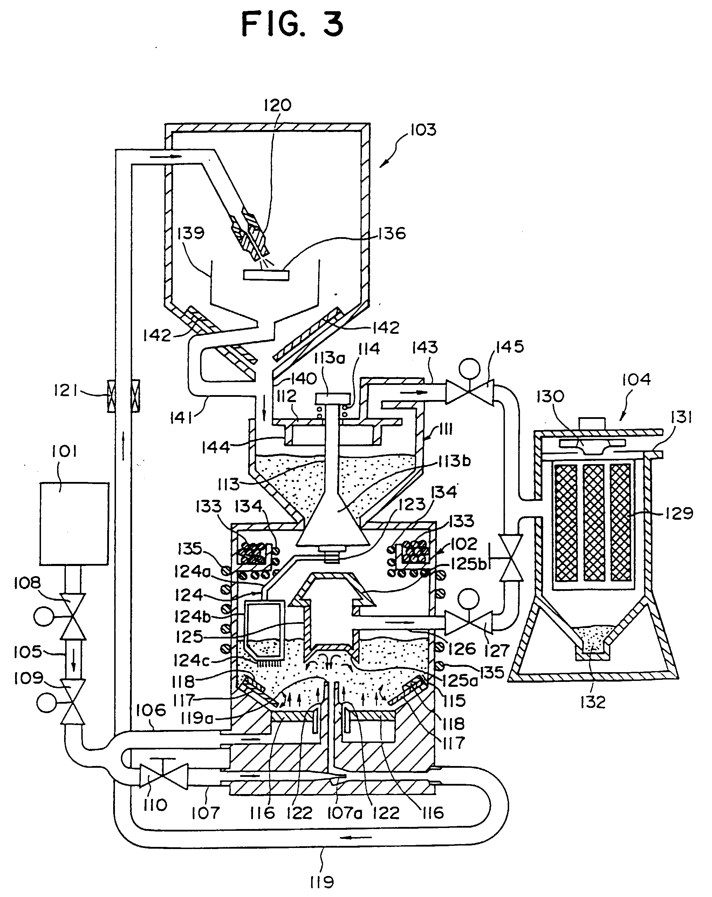

The hopper 111 has a funnelform bottom wall provided with a charging opening 111a in its central portion. The submicron particles are charged through the charging opening 111a into the mixing tank 102. A conical valve element 113 having a stem is fitted in the charging opening 111a. The stem of the valve element 113 extends through the central portion of the cover 112, and a stopper 113a is attached to the extremity of the stem of the valve element 113. A coil spring 114 is disposed between the stopper 113a and the cover 12 to bias the valve element 113 upward as viewed in Fig. 3 so that the circumference of the conical portion 113b of the valve element 113 is normally in close contact with the lower edge of the bottom wall of the hopper 111 to keep the charging opening 111a closed. When necessary, the valve element 113 is depressed against the resilience of the coil spring 114 to separate the conical portion 113b from the lower edge of the hopper 11 to open the charging opening 111a to let the submicron particles contained in the hopper 111 fall into the mixing tank 102.

The mixing tank 102 is a cylindrical vessel containing the submicron particles 115. The mixing tank 102 has a funnelform bottom wall provided at its lower end with a cermet filter disk 116 (a porous disk having numerous pores formed by sintering a metal powder). The first air supply pipe 106 connected to the air compressor 101 is connected to the mixing tank 102 on the side of the backside of the filter disk 116 to supply the compressed air through the first air supply pipe 106 and the filter disk 116 into the mixing tank 102.

A plurality of vibrators 117 are arranged around the filter disk 116 on the inclined inner circumference of the funnelform bottom wall of the mixing tank 102 with their free ends positioned above the filter disk 116 and with their base ends fixed to the funnelform bottom wall of the mixing tank 102. Each vibrator 117 is, for example, a bimorph device having a pair of piezoelectric elements disposed one over the other and electrodes.

When an ac voltage is applied to the vibrators 117, the free ends of the vibrators 117 vibrate vertically to disperse the submicron particles 115 mechanically so that the submicron particles 115 and the compressed air supplied through the filter disk 116 into the mixing tank 102 are mixed. The frequency of the ac voltage applied to the vibrators 117 may be a high frequency in the range of 200 to 400 Hz. Desirably, the frequency of the ac voltage is approximately equal to the resonance frequency of the bimorph devices. Driving the adjacent vibrators 117 respectively in opposite phases of vibration enhances the effects of the vibrators 117.

The base ends of the vibrators 117 are covered with a rubber sheet 118 to prevent the submicron particles 115 from clogging the spaces under the vibrators 117 so that the vibration of the vibrators 117 is not obstructed.

A feed pipe 19 having one end opening into the mixing tank 102 is extended through the central portion of the filter disk 16 to send the submicron particles stirred and dispersed by the compressed air from the mixing tank 102. The extremity 107a of the second air supply pipe 107 is inserted in the feed pipe 119 to suck the submicron particles 115 into the feed pipe 19 by the agency of a negative pressure produced by blowing the compressed air through the second air supply pipe 107, to mix the submicron particles 115 in the compressed air and to transport the submicron particles 115 by the compressed air. The feed pipe 119 is extended into the deposition vessel 103 and is provided at its extremity with a nozzle 120. A vibrator 121 is provided on the feed pipe 119 prevents the deposition of the submicron particles 115 in the feed pipe 119.

The feed pipe 119 is a flexible tube, such as an urethane tube, a nylon tube or a vinyl tube. The feed pipe 119 is extended in a gentle curve without forming sharp bends. The pipes are joined without forming any step at the junctions so that air may not stagnate in the junctions and the submicron particles 115 may not accumulate to clog the pipes.

Air jets 122 are formed around the feed pipe 119 in the bottom wall of the mixing tank 102. Part of the compressed air supplied through the first air supply pipe 106 is jetted through the air jets 122 to produce turbulent air currents around the open end 119a of the feed pipe 119 to stir the submicron particles 115 violently.

A stirring mechanism 124 is attached to the bottom surface of the valve element 113. The stirring mechanism 124 comprises a rotary shaft 123 journaled on the valve element 113, an arm 124a projecting from the rotary shaft 123, a frame 124b formed of a metal wire or the like, and a brush 124c attached to the lower end of the frame 124b. The rotary shaft 123 is driven for rotation to crush agglomerates of the submicron particles 115 in the mixing tank 102.

A particle collector 125 is disposed over the feed pipe 119 within the mixing tank 102. A particle collecting recess 125a of a trapezoidal cross section is formed in the bottom surface of the particle collector 125 opposite to the open end 119a of the feed pipe 119. The upper half portion of the particle collector 125 is formed in a filter 125b of a porous material. The filter 125b is connected to the exhauster 104 by a pipe 126. The pipe 126 is provided with a solenoid valve 127 and a flow control valve 128 to control the flow and flow rate of exhaust air through the pipe 126.

The exhauster 104 has a filter 129 and a suction fan 130. The suction fan 130 sucks air through the pipe 126 and the filter 129 from the mixing tank 102 and discharges the air through an air outlet 131 after purifying the air by the filter 129. The submicron particles arrested by the filter 129 are collected in a pit 132 formed under the filter 129.

Dehumidifying means 133, such as silica gel, and heating means 134, such as a heater, are provided in the upper portion of the interior of the mixing tank 102 to keep the submicron particles 115 dry within the mixing tank 102 so that the submicron particles 115 may not agglomerate.

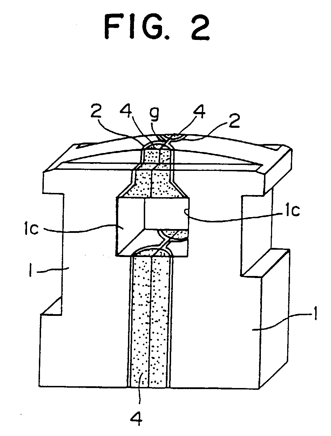

The nozzle 120, which corresponds to the nozzle 3 shown in Fig. 1B, attached to the extremity of the feed pipe 119 connected to the mixing tank 102 is held within the deposition vessel 103. A work 136, i.e., the ferrite substrate shown in Fig. 2A, is disposed opposite to the nozzle 120.

The work 136 is surrounded with the side wall of a suction funnel 139 to prevent the scatter of the submicron particles 115 in the deposition vessel 103. The scatter of the submicron particles 115 in the deposition vessel 103 allows the submicron particles 115 to escape outside the deposition vessel 103 when the door of the deposition vessel 103 is opened and reduces particle recovering efficiency.

The deposition vessel 103 also has a funnelform bottom wall. A return pipe 140 is connected to the bottom wall of the deposition vessel 103. The return pipe 140 is connected together with a return pipe 141 connected to the suction funnel 139 to the cover 112 of the hopper 111. Vibrators 142, such as bimorph devices, are provided on the bottom wall of the deposition vessel 103 to discharge the submicron particles 115 deposited over the inner surface of the bottom wall rapidly from the deposition vessel 103.

Also connected to the cover 112 is an exhaust pipe 143 connected together with the pipe 126 to the exhauster 104. An annular partition wall 144 extends downward from the inner surface of the cover 112. The partition wall 144 separates the submicron particles delivered through the return pipes 140 and 141 from air on the principle of a cyclon separator and classifies the submicron particles roughly, so that the submicron particles fall in the hopper 111. On the other hand, the air separated from the submicron particles flows through the exhaust pipe 143 into the exhauster 104 and is discharged from the exhauster 104. A solenoid valve 145 is provided on the exhaust pipe 143 to control the flow of air.

In operation, the air compressor 101 discharges compressed air into the first air supply pipe 106 and the second air supply pipe 107. The compressed air discharged into the first air supply pipe 106 flows through the filter disk 116 and the air jets 122 into the mixing tank 102 to stir the submicron particles 115 and, consequently, some of the submicron particles are collected around the open end 119 of the feed pipe 119 by the agency of the particle collecting recess 125a of the particle collector 125.

The mechanical dispersion of the submicron particles 115 by the vibrators 117 maintains the stirring effect of the compressed air effectively. The solenoid valve 127 provided on the pipe 126 connected to the particle collector 125, and the solenoid valve 145 provided on the exhaust pipe 143 connected to the cover 112 of the hopper 111 are opened alternately at a fixed period. The vibratory variation of pressure in the mixing tank 102 caused by the alternate opening of the solenoid valves 127 and 145 further enhances the stirring effect of the compressed air. When the flow rate of air flowing out from the mixing chamber 102 is reduced to a fixed value by operating the flow control valve 128, the range of pressure variation is narrowed, so that the submicron particles 115 are blown at a substantially fixed rate regardless of the alternate opening of the solenoid valves 127 and 145.

On the other hand, the compressed air discharged into the second air supply pipe 107 flows directly into the feed pipe 119 to produce a negative pressure in the feed pipe 119 and, consequently, the submicron particles 115 collected around the open end 119a of the feed pipe 119 are sucked into the feed pipe 119 and are mixed in the compressed air within the feed pipe 119.

Then, the mixture of the compressed air and the submicron particles flows through the feed pipe 119 and is blow through the nozzle 120 against the surface of the work 136 for deposition. The submicron particles 115 are blown preferably at a flying velocity of 50 m/sec or higher, more preferably, at a flying velocity of 50 km/sec or higher.

The submicron particles which have not been deposited are returned through the pipes 140 and 141 to the hopper 111 for recirculation.

After filling up the track width regulating grooves 1a and the coil groove 1b with the nonmagnetic material 4 by the blowing apparatus, the excessive deposition of the nonmagnetic material 4 is removed and the surface of the soft magnetic metal thin film 2 is exposed by polishing, and the nonmagnetic material 4 filling up the coil groove 1b is removed to form a coil groove 1c as shown in Fig. 1C.

Then, the pair of substrates 1 are joined together as shown in Fig. 1D and is bonded together by low-temperature metal diffusion.

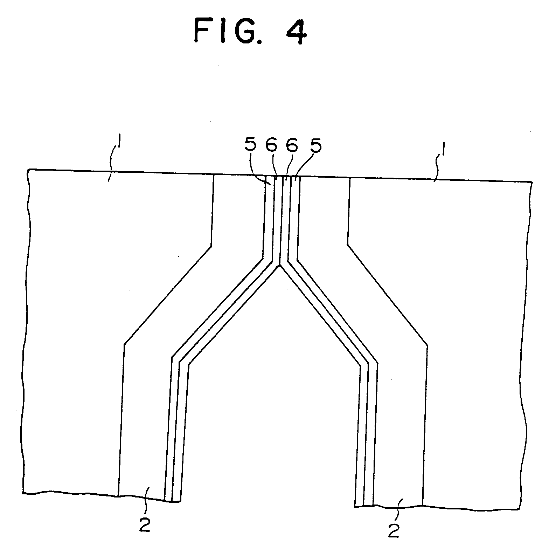

In bonding the substrates 1 together by low-temperature metal diffusion as shown in Fig. 4 a first metal layer 5 and a second metal layer 6 are formed over the soft magnetic metal thin films 2 of each of the substrates 1, the substrates 1 are put together with the second metal layers 6 in contact, and then the substrates 1 are heated at a temperature in the range of 150 to 300°C while the substrates 1 are pressed against each other by a pressure in the range of 1MPa to 100MPa (Mega Pascal). The second metal layers 6 are formed of a material subject to thermal diffusion, such as Au, Ag or Pd. In view of adhesion, the first metal layers 5 is formed of a metal, such as Cr or Ti. A base layer, such as a SiO₂ layer, may be formed under the first metal layer 5.

In an experimental fabrication of magnetic heads, the first metal layer 5 was formed of Cr, the second metal layer was formed of Au, and the combined substrates 1 were heated at 250°C for one hour in a vacuum of 10⁻⁶ torr while the substrates 1 were pressed against each other by a pressure of 100 kgf/cm².

A structure thus formed by thus joining together the substrates 1 is sliced to obtain magnetic heads as shown in Fig. 2.

The magnetic head has the track width regulating grooves 1a filled with the nonmagnetic material 4 on the opposite sides of the magnetic gap g, and the magnetic head is less subject to partial abrasion.

### Example 2

In manufacturing a magnetic head by a magnetic head manufacturing method in a second embodiment according to the present invention, a nonmagnetic material is blown into grooves from a position on the side of the surface of the substrates to be in sliding contact with a magnetic recording medium to fill up the grooves with the nonmagnetic material after joining together a pair of ferrite substrates.

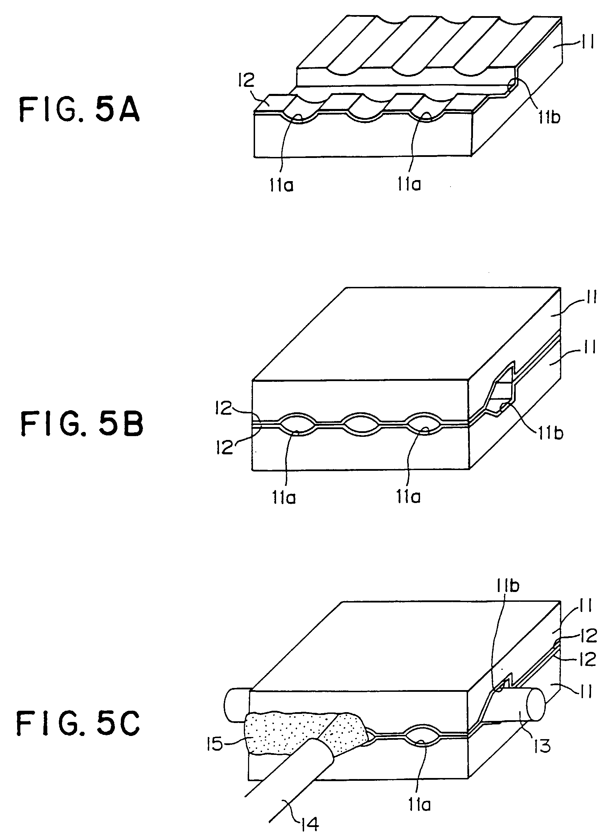

As shown in Fig. 5A, track width regulating grooves 11a and coil grooves 11b are formed in a pair of ferrite substrates 11, respectively, and then soft magnetic metal thin films 12 are formed over the joining surfaces of the ferrite substrates 11.

As shown in Fig. 5B, the ferrite substrates 11 are joined together to form a gap by a low-temperature metal diffusion process similar to that employed in the first embodiment.

A nonmagnetic material is blown into the grooves from a position on the side of the surface of the joined ferrite substrates 1 to be in sliding contact with a magnetic recording medium.

As shown in Fig. 5C, a stopper 13 is inserted in the coil groove 11b of the joined ferrite substrate 11, and then a nonmagnetic material 15 is blown through a nozzle 14. The blowing apparatus and blowing conditions employed in the first embodiment may be applied to blowing the nonmagnetic material 15. Preferably, the stopper 13 is formed of a material capable of being dissolved in and removed by a solvent, such as a wax, for example, stick wax or electron wax (Nikka Seiko K.K.). Since the wax has a low softening point, the stopper 13 formed of such a wax can partly be softened by heating at a temperature in the range of 60 to 70°C so that the stopper 13 can be provided fixedly in the coil groove 11b. Thus, the nonmagnetic material 15 can stably be deposited by blowing.

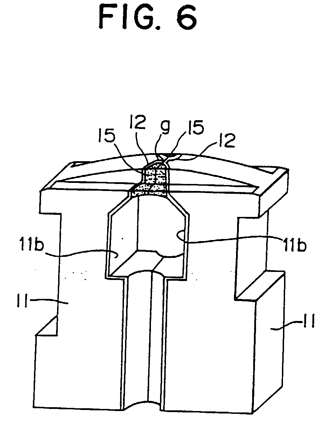

After the completion of deposition of the nonmagnetic material 15, the surface of the structure of the ferrite substrates 11 to be brought into contact with a magnetic recording medium is subjected to rounding machining, the stopper 13 is removed by washing the structure by a solvent, and the structure is sliced to obtain magnetic heads as shown in Fig. 6.

The magnetic head is provided with the track width regulating grooves 11a filled with the nonmagnetic material 15 on the opposite sides of the magnetic gap g, respectively. This magnetic head also is less subject to partial abrasion.

Since the magnetic head can be fabricated by the combined use of low-temperature metal diffusion and nonmagnetic material deposition by blowing, no high-temperature heat treatment is necessary. Accordingly, the selection of a material for forming the soft magnetic metal thin film 2 or the soft magnetic metal thin film 12 has a large degree of freedom.

As is apparent from the foregoing description, according to the present invention, the grooves are filled up with the nonmagnetic material by blowing the nonmagnetic material into the grooves. Therefore, the nonmagnetic material may be such as having a high abrasion resistance, and the magnetic head is less subject to the adverse effect of partial abrasion than the magnetic head filled with glass. Thus, the magnetic head manufacturing method is capable of manufacturing a magnetic head having a high output capacity.

The use of low-temperature metal diffusion for joining the substrates in combination with blowing eliminates high-temperature heat treatment, so that the magnetic core may be formed of an amorphous material having a low temperature of crystallization. Thus, the magnetic head manufacturing method in accordance with the present invention fully utilizes the advantage of low-temperature metal diffusion for manufacturing a magnetic head having excellent electromagnetic conversion characteristics.

## Claims

1. A method for manufacturing a magnetic transducer head in which a pair of magnetic core members (2,12) is formed by depositing a soft magnetic metal thin film, respectively, over the joining surfaces of each of respective substrate members (1; 12) and are bonded together with their bonding surfaces being opposite and parallel to the corresponding joining surfaces of the respective substrate members (1; 11) while forming a magnetic gap (g) therebetween, said magnetic gap having a width corresponding to a recording track width on a travelling magnetic recording medium, said gap width being smaller than a thickness of said core members (2; 12);
forming a pair of grooves (1a; 11a) in said substrate members (1; 11) and said magnetic core members (2; 12) at both end portions of said magnetic gap (g) for regulating said gap width wherein said pair of grooves faces a contact surface of said travelling magnetic recording medium and is filled by non-magnetic material; said method further including a step of blowing non-magnetic powder (4; 15) to said grooves (1a; 11a) resulting in a deposition of said non-magnetic material (4; 15) in said grooves (1a; 11a) on said soft magnetic metal thin film (2; 12).

2. A method of manufacturing a magnetic transducer head according to claim 1, said pair of magnetic core members (2; 12) are bonded by the steps of forming a metal layer (6) over a bonding surface of said core members (2; 12) applying a pressure to said core members (2; 12) under an elevated temperature to bond said core members (2; 12) together by diffusing material of said metal layer (6).

3. A method of manufacturing a magnetic transducer head according to claim 1, said nonmagnetic powder (4; 15) has an average particle size between 0,01 and 3,0 µm.

4. A method of manufacturing a magnetic transducer head according to claim 1, said nonmagnetic powder (4; 15) is blown to a surface of said groove to be deposited by said nonmagnetic material with an incident angle between 0 and 10 degree.

5. A method of manufacturing a magnetic transducer head according to claim 2, said metal layer (6) is formed of one of Au, Ag or Pd.

6. A method of manufacturing a magnetic transducer head according to claim 2, said pressure is between lMPa and 100MPa, and said elevated temperature is between 150 and 300°C.

7. A method of manufacturing a magnetic transducer head according to claim 5, said metal layer (6) is formed on a metal under layer (5) provided on the bonding surface of said core members.

## Patentansprüche

1. Verfahren zur Herstellung eines magnetischen Wandlerkopfs, bei dem zwei Magnetkernglieder (2; 12) jeweils durch Abscheidung eines weichmagnetischen metallischen Dünnfilms über den aneinandergrenzenden Fugenflächen jeweiliger Substratglieder (1; 12) gebildet und miteinander an ihren Kontaktierungsoberflächen miteinander verbunden werden, die den entsprechenden Fugenflächen der jeweiligen Substratflächen (1; 11) parallel und gegenüber liegen, während ein Spalt (g) dazwischen gebildet wird, dessen Weite der Spurweite eines bewegten magnetischen Aufzeichnungsmediums entspricht und die geringer ist als die Dicke der Magnetkernglieder (2; 12);
ein Rillenpaar (1a; 11a) in den Substratgliedern (1; 11) und den Magnetkerngliedern (2; 12) an beiden Endabschnitten des Magnetspalts (g) für die Regulierung der Spaltweite gebildet wird, wobei das Rillenpaar zur Kontaktfläche des bewegten magnetischen Aufzeichnungsmediums hinweist und von unmagnetischem Material ausgefüllt ist; und wobei ein weiterer Verfahrensschritt unmagnetisches Pulver (4; 15) in die Rillen (1a; 11a) bläst mit dem Resultat, daß das unmagnetische Material (4; 15) in den Rillen auf dem weichmagnetischen metallischen Dünnfilm (2; 12) abgelagert wird.

2. Verfahren zur Herstellung eines magnetischen Wandlerkopfs nach Anspruch 1, bei dem die zwei Magnetkernglieder (2; 12) durch folgende Schritte miteinander verbunden werden: eine metallische Lage (6) wird über einer Kontaktierungsfläche der Kernglieder (2; 12) gebildet, und Druck auf die Kernglieder (2; 12) bei erhöhter Temperatur zur Verbindung der Kernglieder (2; 12) aufgebracht, wobei eine Materialdiffusion der metallischen Lage (6) stattfindet.

3. Verfahren zur Herstellung eines Magnetwandlerkopfs nach Anspruch 1, bei dem das unmagnetische Pulver (4; 15) eine mittlere Korngröße zwischen 0,01 und 3,0 µm hat.

4. Verfahren zur Herstellung eines Magnetwandlerkopfs nach Anspruch 1, bei dem das unmagnetische Pulver (4; 15) auf die Oberfläche der mit dem unmagnetischen Material zu beschichtenden Rille mit einem Auftreffwinkel zwischen 0 und 10 Grad geblasen wird.

5. Verfahren zur Herstellung eines Magnetwandlerkopfs nach Anspruch 2, bei dem die metallische Lage (6) entweder aus Au, Ag oder Pd gebildet ist.

6. Verfahren zur Herstellung eines Magnetwandlerkopfs nach Anspruch 2, bei dem der Druck zwischen 1 MPa und 100 MPa und die erhöhte Temperatur zwischen 150 und 300°C liegen.

7. Verfahren zur Herstellung eines Magnetwandlerkopfs nach Anspruch 5, bei dem die metallische Lage auf einer Unterlage (5) gebildet wird, die auf der Kontaktierungsfläche der Kernglieder angebracht ist.

## Revendications

1. Procédé de fabrication d'une tête à transducteur magnétique, dans lequel deux organes (2, 12) de noyau magnétique sont formés
par dépôt d'une couche mince d'un métal faiblement ferromagnétique sur les surfaces de raccordement d'organes respectifs de substrat (1 ; 12) et sont liés à leurs surfaces de jonction qui sont opposées et parallèles aux surfaces de jonction des organes respectifs de substrat (1 ; 11) avec formation d'un entrefer magnétique (g) entre eux, l'entrefer magnétique ayant une largeur qui correspond à la largeur d'un sillon d'enregistrement sur un support mobile d'enregistrement magnétique, la largeur de l'entrefer étant inférieure à l'épaisseur des organes de noyau (2 ; 12), et
par formation de deux gorges (1a ; 11a) dans les organes de substrat (1 ; 11) et les organes de noyau magnétique (2 ; 12), dans les deux parties d'extrémité de l'entrefer magnétique (g), pour la régulation de la largeur de l'entrefer, les deux gorges étant tournées vers une surface de contact avec un support mobile d'enregistrement magnétique et étant remplies d'un matériau non magnétique, le procédé comprenant en outre une étape de soufflage d'une poudre non magnétique (4 ; 15) dans les gorges (1a ; 11a), provoquant le dépôt du matériau non magnétique (4 ; 15) dans les gorges (1a ; 11a) sur la couche mince d'un métal faiblement ferromagnétique (2 ; 12).

2. Procédé de fabrication d'une tête à transducteur magnétique selon la revendication 1, dans lequel les deux organes de noyau magnétique (2 ; 12) sont liés par des étapes de formation d'une couche métallique (6) sur une surface de liaison des organes de noyau (2 ; 12), et d'application d'une pression aux organes de noyau (2 ; 12) à une température élevée afin que les organes de noyau (2 ; 12) soient liés par diffusion du matériau de la couche métallique (6).

3. Procédé de fabrication d'une tête à transducteur magnétique selon la revendication 1, dans lequel la poudre non magnétique (4 ; 15) a une dimension particulaire moyenne comprise entre 0,01 et 3,0 µm.

4. Procédé de fabrication d'une tête à transducteur magnétique selon la revendication 1, dans lequel la poudre non magnétique (4 ; 15) est soufflée sur une surface de la gorge destinée à recevoir le dépôt du matériau non magnétique avec un angle d'incidence compris entre 0 et 10°.

5. Procédé de fabrication d'une tête à transducteur magnétique selon la revendication 2, dans lequel la couche métallique (6) est formée de Au, Ag ou Pd.

6. Procédé de fabrication d'une tête à transducteur magnétique selon la revendication 2, dans lequel la pression est comprise entre 1 et 100 MPa, et la température élevée est comprise entre 150 et 300 °C.

7. Procédé de fabrication d'une tête à transducteur magnétique selon la revendication 5, dans lequel la couche métallique (6) est formée sur une sous-couche métallique (5) placée sur la surface de liaison des organes de noyau.
